# FASCICULE DE BREVET EUROPEEN

(11) **EP 1 160 461 B1**
(45) Date de publication et mention de la délivrance du brevet: **28.07.2004**
(21) Numéro de dépôt: 01401364.3
(22) Date de dépôt: 23.05.2001
(51) Int. Cl.: F15B 15/19

(54) **Actionneur pyrotechnique à membrane déformable**
Pyrotechnischer Aktuator mit verformbarer Membran
Pyrotechnic actuator with deformable membrane

(30) Priorité: 29.05.2000 FR 0006827
(43) Date de publication de la demande: 05.12.2001
(73) Titulaire: EADS SPACE Transportation SA, 75116 Paris (FR)
(72) Inventeur: Benoit, Emmanuel, 75017 Paris (FR); Beau, Jean-François, 95310 Saint Ouen L'Aumone (FR); Le Floch, Erwan, 78400 Chatou (FR)
(74) Mandataire: Poulin, Gérard

(56) Documents cités:
- FR-A- 2 561 743
- US-A- 3 106 131
- US-A- 3 315 748
- US-A- 4 111 221
- DATABASE WPI Section PQ, Week 199308 Derwent Publications Ltd., London, GB; Class Q66, AN 1993-065168 XP002154281 -& SU 1 721 360 A (SALYUT CONS BUR), 23 mars 1992 (1992-03-23)

## Description

### Domaine technique

L'invention concerne un actionneur pyrotechnique à membrane déformable, c'est-à-dire un dispositif apte à actionner un organe extérieur, tel qu'une vanne ou un vérin, sous l'action de gaz sous haute pression produits par des moyens pyrotechniques et agissant sur une membrane déformable.

L'actionneur pyrotechnique selon l'invention peut être utilisé dans de nombreux domaines, et notamment dans les industries aéronautique et spatiale, pour actionner des organes de différentes natures tels que des vannes, des vérins, etc..

### Etat de la technique

Comme l'illustre notamment le document FR-A-2 561 743, un actionneur pyrotechnique comprend habituellement un corps délimitant intérieurement une cavité dans laquelle est placée une membrane déformable. Plus précisément, la membrane déformable divise la cavité en deux chambres étanches l'une par rapport à l'autre. Une première de ces chambres communique avec des moyens pyrotechniques, de telle sorte que la mise en oeuvre desdits moyens a pour effet de remplir cette première chambre de gaz de combustion pyrotechnique sous haute pression. La deuxième chambre contient un organe d'actionnement. La déformation de la membrane engendrée par l'admission des gaz de combustion dans la première chambre a pour effet de déplacer l'organe d'actionnement en éloignement de la première chambre. Dans le document FR-A-2 561 743, qui décrit un actionneur pyrotechnique appliqué à l'actionnement d'une vanne, ce déplacement a pour effet la cassure d'une pièce provoquant l'ouverture ou la fermeture d'un tube intégré dans le corps de l'actionneur et formant une partie d'un circuit de fluide.

Dans un actionneur pyrotechnique de ce type, la membrane est au repos dans un état non précontraint, qui lui donne généralement une forme sensiblement plane. Lorsque des gaz de combustion pyrotechnique sont admis dans la première chambre, la membrane se déforme en direction de la deuxième chambre. Pour garantir l'étanchéité entre les gaz de combustion pyrotechnique admis dans la première chambre et le fluide du circuit, l'intégrité de la membrane doit être préservée. La déformation de la membrane doit donc s'effectuer sur une course fonctionnelle limitée. A cet effet, une surface d'appui est prévue dans la deuxième chambre, de façon à limiter la déformation de la membrane à l'intérieur de cette deuxième chambre.

Cette caractéristique, décrite notamment dans le document FR-A-2 561 743, conduit à limiter la course fonctionnelle de l'organe d'actionnement placé dans la deuxième chambre. Or, c'est cette course fonctionnelle qui détermine et limite l'action de l'organe d'actionnement. Ainsi, dans l'exemple décrit où l'actionneur est utilisé pour commander une vanne, la course fonctionnelle de l'organe d'actionnement définit les dimensions de la pièce qui doit être cassée par l'organe de commande lors de la mise en oeuvre de l'actionneur. Pour un actionneur de dimensions données, cela conduit à limiter le diamètre du tube dans lequel circule le fluide à l'intérieur de la vanne.

Pour remédier à cet inconvénient, on peut envisager d'accroître la course fonctionnelle en augmentant le diamètre de la membrane. Toutefois, cela conduit très rapidement à donner à l'actionneur des dimensions et une masse importantes. Cela est généralement inacceptable, notamment dans les applications les plus courantes de ces actionneurs, que sont les industries aéronautique et spatiale.

On connaît également, du document SU-A-1 721 360, un actionneur pyrotechnique à membrane déformable, dans lequel la membrane présente, au repos, une forme ondulée obtenue par compression de ladite membrane entre un disque perforé, placé dans une première chambre, prévue pour recevoir les gaz de combustion pyrotechnique, et un organe d'actionnement placé dans la deuxième chambre. Cet organe d'actionnement prend alors appui, par des éléments amortisseurs, contre une paroi de la deuxième chambre placée en face de la membrane. Lorsque les moyens pyrotechniques sont actionnés, les gaz de combustion pénètrent dans la première chambre et repoussent l'organe d'actionnement contre la paroi précitée de la deuxième chambre, en déformant les éléments amortisseurs. A la fin de sa course, l'organe d'actionnement agit sur un dispositif d'obturation et détruit un disque de rupture par lequel ce dispositif était initialement lié au corps de l'actionneur. Un ressort déplace ensuite le dispositif d'obturation ainsi libéré, ce qui a pour effet d'ouvrir un circuit de fluide.

Cet actionneur est conçu pour limiter les effets du choc, lors de la mise en oeuvre des moyens pyrotechniques, de façon à en augmenter la fiabilité. Ce résultat est obtenu en limitant la course fonctionnelle servant à commander l'ouverture du circuit de fluide, ce qui est contraire au but recherché dans la présente invention.

### Exposé de l'invention

L'invention a précisément pour objet un actionneur pyrotechnique à membrane déformable dont la conception originale lui permet pratiquement de doubler la course fonctionnelle de l'organe d'actionnement et donc le diamètre du tube dans lequel circule le fluide lorsque cet organe commande l'ouverture ou la fermeture d'une vanne, sans pour autant accroître la taille et la masse de l'actionneur.

Conformément à l'invention, ce résultat est obtenu au moyen d'un actionneur pyrotechnique, comprenant un corps délimitant intérieurement une cavité, une membrane déformable divisant de façon étanche ladite cavité en deux chambres, une première desdites chambres étant apte à recevoir des gaz de combustion pyrotechnique pour amener la membrane dans une position d'actionnement déterminée par une surface d'appui limitant la déformation de la membrane à l'intérieur de la deuxième chambre, ladite deuxième chambre contenant un organe de commande apte à être déplacé par ladite membrane sur une distance correspondant à une course d'actionnement dudit actionneur lorsque les gaz de combustion sont admis dans la première chambre, caractérisé en ce que ladite membrane occupe au repos une position précontrainte en éloignement de la surface d'appui.

Dans l'invention ainsi définie, du fait que la membrane occupe une position précontrainte en éloignement de la surface d'appui lorsque l'actionneur est au repos, la mise en oeuvre de l'actionneur a pour effet de déformer la membrane sur une distance augmentée par rapport à la déformation de la membrane d'un actionneur pyrotechnique de l'art antérieur, sans que cette déformation mette en péril l'étanchéité de ladite membrane. On accroît ainsi sensiblement le déplacement de l'organe susceptible d'être actionné par l'actionneur, et par exemple la taille d'un tube susceptible d'être sectionné par l'actionneur, sans augmenter la taille et la masse de celui-ci.

Dans un mode de réalisation préféré de l'invention, la position précontrainte de la membrane est sensiblement symétrique par rapport à sa position d'actionnement. La course fonctionnelle est alors pratiquement doublée par rapport à un actionneur pyrotechnique de l'art antérieur.

De préférence, la position précontrainte de la membrane est définie par son maintien en butée contre l'organe de commande, normalement en appui contre une pièce apte à se rompre ou à se déplacer lorsque les gaz de combustion sont admis dans la première chambre.

Avantageusement, la pièce précitée fait partie intégrante d'un circuit de fluide, de sorte que sa rupture a pour effet un changement d'état de ce circuit, c'est-à-dire selon le cas son ouverture ou sa fermeture.

De préférence, la membrane est plane lorsqu'elle se trouve dans un état non précontraint.

### Brève description des dessins

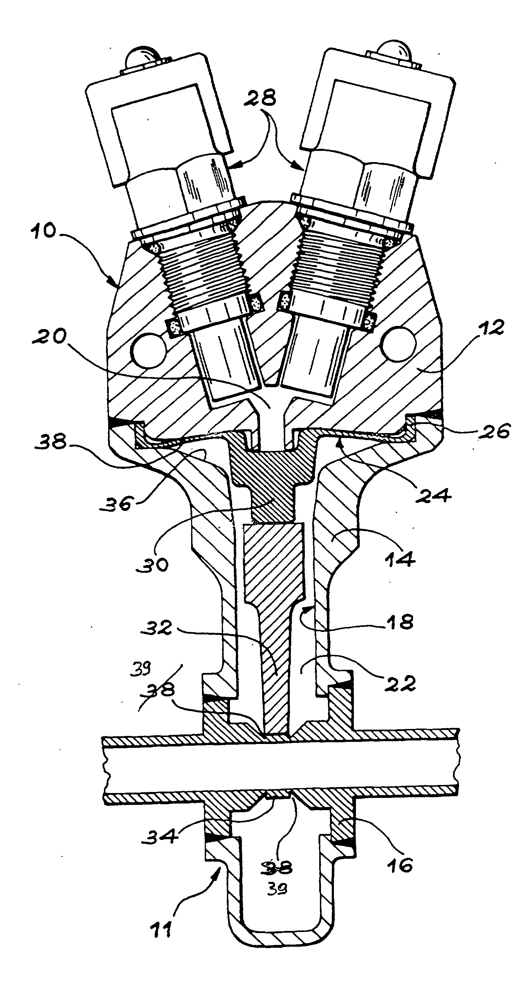

On décrira à présent, à titre d'exemple non limitatif, un mode de réalisation préféré de l'invention, en se référant au dessin annexé dans lequel la figure unique est une vue en coupe longitudinale d'un actionneur pyrotechnique conforme à l'invention.

### Description détaillée d'un mode de réalisation préféré

Sur la figure unique, la référence 10 désigne de façon générale le corps d'un actionneur pyrotechnique conforme à l'invention. Dans le mode de réalisation illustré ici, à titre d'exemple nullement limitatif, l'actionneur commande l'ouverture d'une vanne 11, intégrée dans le corps 10. Le corps 10 est formé ici, à titre d'exemple, de trois pièces 12, 14 et 16 assemblées entre elles par soudure.

Le corps 10 délimite intérieurement une cavité 18. Cette cavité 18 est divisée en deux chambres 20 et 22 par une membrane déformable 24. Dans le mode de réalisation représenté, la membrane déformable 24 présente la forme d'un disque plan lorsqu'elle se trouve dans un état non précontraint. Elle comprend un bord périphérique extérieur 26, emprisonné de façon étanche entre les pièces 12 et 14 du corps de vanne 10. Par conséquent, la membrane déformable 24 sépare les chambres 20 et 22 de façon étanche.

Il est à noter qu'au repos, la membrane 24 peut présenter une forme non plane, par exemple ondulée, sans sortir du cadre de l'invention.

La première chambre 20, formée intégralement dans la pièce 12 du corps 10, est apte à recueillir des gaz de combustion pyrotechnique produits par un ou plusieurs dispositifs pyrotechniques tels que les deux dispositifs 28 illustrés à titre d'exemple non limitatif sur la figure. Le ou les dispositifs pyrotechniques 28 peuvent être montés directement dans la pièce 12 comme on l'a représenté sur la figure, ou placés à l'extérieur du corps 10 et reliés à celui-ci par un tube communiquant avec la chambre 20. Chaque dispositif pyrotechnique 28 peut êcre constitué par tout dispositif connu de l'homme du métier, susceptible d'engendrer brusquement une grande quantité de gaz de combustion, sous haute pression, à l'intérieur de la chambre 20. Par conséquent, aucune description n'en sera faite.

Dans sa partie attenante à la membrane 24, la première chambre 20 forme un col, de diamètre réduit, centré sur l'axe de la membrane 24. Ce col permet de détendre les gaz de combustion lorsqu'ils arrivent au contact de la membrane.

Dans sa partie centrale située du côté de la deuxième chambre 22, la membrane déformable 24 comporte une partie cylindrique massive 30, qui fait saillie dans la chambre 22.

Un organe de commande 32, se présentant ici sous la forme d'un poinçon, est logé dans une partie sensiblement tubulaire de la deuxième chambre 22. Plus précisément, une première extrémité de l'organe de commande 32 est en appui contre la face d'extrémité de la partie cylindrique massive 30 et l'extrémité opposée de l'organe de commande 32 est en appui contre une partie centrale 34 de la troisième pièce 16 du corps 10.

Conformément à l'invention et comme l'illustre la figure, l'agencement décrit ci-dessus est tel que la membrane 24 occupe au repos une position précontrainte, en éloignement d'une surface d'appui 36 prévue dans la deuxième chambre 22, en regard de la membrane 24. Plus précisément, la position précontrainte occupée au repos par la membrane 24 est telle que celle-ci se trouve à proximité d'une surface 38 formée sur la première pièce 12 du corps 10, dans la première chambre 20, en regard de la membrane 24.

Dans le mode de réalisation préféré de l'invention illustré sur la figure unique, la position précontrainte de la membrane 24 illustrée sur la figure est sensiblement symétrique par rapport à une position d'actionnement de ladite membrane. La position d'actionnement de la membrane est obtenue lorsque les gaz de combustion sont admis dans la première chambre 20, c'est-à-dire lorsque la membrane 24 est en butée contre la surface d'appui 36.

Dans le mode de réalisation représenté à titre d'exemple sur la figure unique, la troisième pièce 16 du corps 10 est une pièce de forme tubulaire, qui fait partie d'un circuit de fluide, dont on désire pouvoir interrompre l'écoulement par un actionnement de la vanne 11, commandé par l'actionneur 10. La pièce 16 traverse deux parois opposées de la deuxième pièce 14 ainsi que la deuxième chambre 22, dans une partie de celle-ci située au-delà de l'extrémité de l'organe de commande 32. De plus, la troisième pièce 16 est soudée de façon étanche sur les deux parois opposées de façon à préserver le confinement de la chambre 22.

La partie centrale 34 de la pièce 16, contre laquelle est en appui l'organe de commande 32, est conçue de façon à pouvoir se rompre par cisaillement lorsque l'organe de commande 32 est déplacé vers le bas en considérant la figure, du fait de l'admission de gaz de combustion dans la première chambre 20. A cet effet, la partie centrale 34 de la troisième pièce 16 est reliées aux parties adjacentes de celle-ci par des sections 39 de moindre épaisseur.

Le fonctionnement de l'actionneur pyrotechnique selon l'invention va à présent être décrit en se référant à la figure unique.

Au repos, la membrane 24 est précontrainte en éloignement de la surface d'appui 36. Comme on l'a décrit précédemment, cette précontrainte est obtenue sous l'action de l'organe de commande 32, dont les extrémités opposées sont respectivement en appui contre la partie cylindrique massive 30 solidaire de la membrane 24 et contre la partie centrale 34 de la pièce 16.

Lorsque le ou les dispositifs pyrotechniques 28 sont mis en oeuvre, du gaz de combustion est brusquement injecté en grande quantité et sous haute pression à l'intérieur de la première chambre 20. Sous l'effet de cette brusque augmentation de la pression dans la chambre 20, la membrane 24 se déforme vers la surface d'appui 36 en repoussant dans la même direction la partie cylindrique massive 30 et l'organe de commande 32. Cela a pour effet de séparer, par cisaillement, la partie centrale 34 de la troisième pièce 16 des parties adjacentes de celle-ci. La partie de l'organe de commande 32 la plus proche de la troisième pièce 16 pénètre alors entre les parties adjacentes de celle-ci pour prendre la place de la partie centrale 34. Par conséquent, le circuit de fluide passant par la troisième pièce 16 est immédiatement fermé.

Dans l'actionneur pyrotechnique selon l'invention, la précontrainte imposée initialement à la membrane 24 lui permet, ainsi qu'à la partie cylindrique massive 30 et à l'organe de commande 32, de disposer d'une distance de déplacement accrue. En effet, la membrane 34 se déplace alors entre sa position précontrainte en éloignement de la surface d'appui 36 et sa position d'actionnement, en appui contre la surface d'appui 36. L'acticnneur 10 est conçu de telle sorte que la distance de déplacement de la membrane 24 correspond à la course d'actionnement de la vanne 11. En d'autres termes, le déplacement de la membrane 24 est égal à la course nécessaire à l'ouverture ou à la fermeture de la vanne 11 (selon le type de vanne concerné).

La course fonctionnelle est ainsi pratiquement doublée par rapport à celle dont dispose un actionneur pyrotechnique de l'art antérieur présentant une membrane 24 de même diamètre. Par exemple, il est ainsi possible, sans accroître l'encombrement et la masse de l'actionneur, d'obturer un circuit présentant un diamètre pratiquement double de celui qui pouvait être obturé par un actionneur de l'art antérieur.

## Revendications

1. Actionneur pyrotechnique, comprenant un corps (10) délimitant intérieurement une cavité (18), une membrane déformable (24) divisant de façon étanche ladite cavité en deux chambres (20,22), une première (20) desdites chambres étant apte à recevoir des gaz de combustion pyrotechnique pour amener la membrane (24) dans une position d'actionnement déterminée par une surface d'appui (36) limitant la déformation de la membrane (24) à l'intérieur de la deuxième chambre (22), ladite deuxième chambre (22) contenant un organe de commande (32) apte à être déplacé par ladite membrane (24) sur une distance correspondant à une course d'actionnement dudit actionneur, lorsque les gaz de combustion sont admis dans la première chambre (20), **caractérisé en ce que** ladite membrane (24) occupe au repos une position précontrainte en éloignement de la surface d'appui (36).

2. Actionneur pyrotechnique selon la revendication 1, dans lequel la position précontrainte de la membrane (24) est sensiblement symétrique par rapport à sa position d'actionnement.

3. Actionneur pyrotechnique selon l'une quelconque des revendications 1 et 2, dans lequel la position précontrainte de la membrane (24) est définie par son maintien en butée contre ledit organe de commande (32), normalement en appui contre une pièce (34) apte à se rompre ou à se déplacer lorsque les gaz de combustion sont admis dans la première chambre (20).

4. Actionneur pyrotechnique selon la revendication 3, dans lequel ladite pièce (34) fait partie intégrante d'un circuit de fluide, de sorte que sa rupture a pour effet un changement d'état dudit circuit.

5. Actionneur pyrotechnique selon l'une quelconque des revendications précédentes, dans lequel la membrane (24) est plane, dans un état non précontraint.

## Patentansprüche

1. Pyrotechnischer Aktuator mit einem Körper (10), der im Inneren eine Ausnehmung (18) umgrenzt, und einer verformbaren Membran, welche die Ausnehmung abdichtend in zwei Kammern (20,22) unterteilt, wobei eine (20) der Kammern pyrotechnische Verbrennungsgase aufnehmen kann, um die Membran (24) in eine Betätigungsposition zu bringen, die von einer die Verformung der Membran (24) im Inneren der zweiten Kammer (22) begrenzenden Anlagefläche (36) festgelegt ist, wobei die zweite Kammer (22) ein Steuerorgan (32) aufweist, das von der Membran (24) um eine einem Betätigungshub des Aktuators entsprechende Strecke verschoben werden kann, wenn die Verbrennungsgase in die erste Kammer (20) eingelassen werden,
**dadurch gekennzeichnet, dass** die Membran (24) in Ruhestellung eine von der Anlagefläche (36) entfernte Vorbelastungsposition einnimmt.

2. Pyrotechnischer Aktuator nach Anspruch 1, wobei die Vorbelastungsposition der Membran (24) im wesentlichen symmetrisch in bezug auf ihre Betätigungsposition ist.

3. Pyrotechnischer Aktuator nach einem der Ansprüche 1 oder 2, wobei die Vorbelastungsposition der Membran (24) dadurch festgelegt ist, dass deren Anschlag an dem Steuerorgan (32) aufrechterhalten wird, das normalerweise an einem Teil (34) anliegt, welches zerbrechen bzw. zerreißen oder sich verschieben kann, wenn die Verbrennungsgase in die erste Kammer (20) eingelassen werden.

4. Pyrotechnischer Aktuator nach Anspruch 3, wobei das Teil (34) integraler Teil eines Fluidkreislaufs ist, so dass ein Zerbrechen bzw. Zerreißen eine Zustandsänderung des Kreislaufs bewirkt.

5. Pyrotechnischer Aktuator nach einem der vorangehenden Ansprüche, wobei die Membran (24) in einem nichtvorbelasteten Zustand flach ist.

## Claims

1. Pyrotechnic actuator comprising a body (10) internally defining a cavity (18), a deformable membrane (24) tightly subdividing said cavity into two chambers (20, 22), a first (20) of said chambers being able to receive pyrotechnic combustion gases in order to bring the membrane (24) into an actuating position determined by a bearing surface (36) limiting the deformation of the membrane (24) within the second chamber (22), said second chamber (22) containing a control member (32) displaceable by said membrane (24) over a distance corresponding to an actuating travel of said actuator, when the combustion gases are admitted into the first chamber (20), **characterized in that** said membrane (24), in the inoperative state, occupies a prestressed position moving away from the bearing surface (36).

2. Pyrotechnic actuator according to claim 1, wherein the prestressed position of the membrane (24) is substantially symmetrical with respect to its actuating position.

3. Pyrotechnic actuator according to either of the claims 1 and 2, wherein the prestressed position of the membrane (24) is defined by its maintenance in abutment against said control member (32), normally bearing against a part (34) able to break or move when combustion gases are admitted into the first chamber (20).

4. Pyrotechnic actuator according to claim 3, wherein said part (34) forms an integral part of a fluid circuit, so that its breaking leads to a change of state of said circuit.

5. Pyrotechnic actuator according to any one of the preceding claims, wherein the membrane (24) is planar in a non-prestressed state.
